# EUROPÄISCHE PATENTSCHRIFT

(11) **EP 3 710 905 B1**
(45) Veröffentlichungstag und Bekanntmachung des Hinweises auf die Patenterteilung: **15.02.2023**
(21) Anmeldenummer: 19813782.0
(22) Anmeldetag: 29.11.2019
(51) Int. Cl.: G05D 1/02

(54) **INFRASTRUKTURSYSTEM**
INFRASTRUCTURE SYSTEM
SYSTÈME D'INFRASTRUCTURE

(30) Priorität: 03.12.2018 DE 102018130720
(43) Veröffentlichungstag der Anmeldung: 23.09.2020
(73) Patentinhaber: IMA Schelling Deutschland GmbH, 32312 Lübbecke (DE)
(72) Erfinder: RISCHE, Stefan, 32257 Bünde (DE)
(74) Vertreter: Schober, Mirko
(86) Internationale Anmeldenummer: PCT/EP2019/083161
(87) Internationale Veröffentlichungsnummer: WO 2020/114916

(56) Entgegenhaltungen:
- US-A1- 2018 129 201
- US-A1- 2018 327 009
- XU ZHONGLIN ET AL: "Automated Toll Gate Passing", 2018 IEEE INTELLIGENT VEHICLES SYMPOSIUM (IV), IEEE, 26. Juni 2018 (2018-06-26), Seiten 168-173, XP033423567, DOI: 10.1109/IVS.2018.8500687 [gefunden am 2018-10-18]

## Beschreibung

### Technisches Gebiet

Die Erfindung betrifft ein Verfahren zum Betreiben eines Infrastruktursystem nach dem Oberbegriff des Anspruchs 1.

### Stand der Technik

Infrastruktursysteme sowie Verfahren zum Betreiben solcher Infrastruktursysteme sind beispielsweise aus DE 20 2015 001 193 A1, DE 20 2013 008 609 U1 und DE 697 12 906 T2 bekannt. In Infrastruktursystemen dieser Art, auch im Folgenden kurz Infrastruktur genannt, werden zur Automatisierung oftmals fahrerlose Transportsysteme, kurz FTS, eingesetzt. Sie beinhalten in der Regel eine Infrastruktur, innerhalb welcher sich fahrerlose Transportfahrzeuge oder kurz AGV oder deutsch FTF selbstständig bewegen. In der Regel umfassen diese Systeme eine Leitsteuerung, die die entsprechenden AGVs koordiniert. Üblicherweise wird für die Fahrzeuge eine Navigationseinrichtung verwendet, sodass sie sich in Zusammenarbeit mit der Leitsteuerung innerhalb der Infrastruktur bewegen können. Wenn entsprechende fahrerlose Transportfahrzeuge durch die Infrastruktur fahren, so kann es immer vorkommen, dass diese auf Gegenstände im Fahrweg treffen bzw. beispielsweise Hindernisse auftauchen. Zusätzlich zu ihrer eigentlichen Navigationseinrichtung weisen solche fahrerlosen Transportfahrzeuge immer auch einen Sicherheitsscanner auf, der in der Regel den Bereich vor dem fahrerlosen Transportfahrzeug, also den in Fahrtrichtung vorausliegenden Bereich, nach Hindernissen abtastet. Diese Sicherheitsscanner können unterschiedliche Techniken einsetzen. Bekannt sind unter anderem sogenannte Laserscanner, bei denen ein Laserstrahl mit einer bestimmten Abtastfrequenz von dem Scanner in einem Winkel auf den Boden vor dem fahrerlosen Transportfahrzeug abgestrahlt wird. Der Laserstrahl wird hin und her bewegt, um nicht nur einen Punkt im Raum, sondern einen Bereich zu ertasten. Gerät ein Hindernis in den Weg, so kann über den Laserscanner, der Sensoren oder Erfassungseinrichtungen erfasst, von einem Hindernis zurückgeworfenes Laserlicht erfasst und entsprechend ein Signal erzeugt werden, dass das Fahrzeug gegebenenfalls zur Richtungsänderung oder zum Anhalten anweisen kann. Natürlich können nicht nur Laserscanner eingesetzt werden, jede Art von ausgesandten Signalen, wie zum Beispiel Ultraschallsignalen, allgemeinen akustischen Signalen oder elektromagnetischen Signalen sind hierfür denkbar.

In vielen Infrastrukturen, in denen solche fahrerlosen Transportfahrzeuge unterwegs sind, existieren zudem sogenannte Sicherheitsbereiche, beispielsweise Bereiche um Maschinen herum, welche vom Personal nur unter bestimmten Voraussetzungen begangen werden können, nämlich wenn entsprechende Sicherheit garantiert werden kann. Üblicherweise sieht das Sicherheitsszenario beim Eintreten einer Person in den Sicherheitsbereich vor, dass die sich im Sicherheitsbereich befindliche Maschine angehalten werden kann, damit die Person keinen Schaden nehmen kann. Vorstellbar ist auch, dass fahrerlose Transportwerkzeuge, die in der entsprechenden Infrastruktur eingesetzt werden, in die Nähe eines Sicherheitsbereiches kommen können. Unter Umständen besteht aber eine Gefahr, die für eine menschliche Person beim Betreten des Sicherheitsbereichs besteht, für ein fahrerloses Transportfahrzeug, welches möglicherweise für die Fertigung benötigte Teile anliefert, tatsächlich nicht oder nicht im selben Maße, sodass für einen solchen Fall ein anderes Sicherheitsszenario gefahren werden kann, wenn ein fahrerloses Transportfahrzeug in den Sicherheitsbereich gelangt.

### Die Erfindung

Der Erfindung liegt die Aufgabe zugrunde, ein Infrastruktursystem und ein Verfahren zu dessen Betrieb anzugeben, mit welchen es möglich ist, unterschiedliche Sicherheitsszena-rien in dem Sicherheitsbereich einer Infrastruktur fahren zu können.

Gelöst wird diese Aufgabe durch ein Verfahren laut Anspruch 1.

Vorteilhafte Ausführungsformen finden sich in den jeweiligen abhängigen Ansprüchen.

Nach dem erfindungsgemäßen Verfahren zum Betreiben eines Infrastruktursystems, welches insbesondere oben beschrieben wurde, werden erfindungsgemäß die Schritte laut Anspruch 1 ausgeführt.

Für das erfindungsgemäße Verfahren kann ein Infrastruktursystem verwendet werden, dass ein fahrerloses Transportsystem (FTS) mit wenigstens einem fahrerlosen Transportfahrzeug, eine Steuerung sowie wenigstens einen Sicherheitsbereich mit einem für das fahrerlose Transportfahrzeug durchfahrbaren Einfahrtsbereich umfasst. Das wenigstens eine fahrerlose Transportfahrzeug weist einen ein Abtast-Signal aussendenden Sicherheitsscanner auf. Dieser ist dazu ausgelegt - unabhängig von einem Navigationssystem zur Steuerung und Positionsbestimmung des fahrerlosen Transportfahrzeugs - im Fahrbereich des fahrerlosen Transportfahrzeugs befindliche Gegenstände und Hindernisse zu erfassen. Im Einfahrtsbereich, insbesondere einem ortsfesten Teil des Einfahrtsbereiches, ist erfindungsgemäß ein Sensor angeordnet, welcher das von dem wenigstens einen fahrerlosen Transportfahrzeug ausgesendete Abtast-Signal erfassen kann. Die Steuerung des FTS ist dazu ausgelegt, im Ansprechen auf ein vorgegebenes, von dem Sensor erfasstes Abtast-Signal das Vorhandensein und/oder eine für das Befahren des Sicherheitsbereiches erforderliche Autorisierung des fahrerlosen Transportfahrzeugs im Einfahrtsbereich festzustellen.

Nach einer vorteilhaften Ausführungsform des erfindungsgemäßen Verfahrens veranlasst die Steuerung die Öffnung eines im Einfahrtsbereich zum Sicherheitsbereich befindlichen Durchfahrtors, falls das erfasste Abtast-Signal zu einem zur Durchfahrt autorisierten fahrerlosen Transportfahrzeug gehört, oder, falls das erfasste Abtast-Signal nicht zu einem autorisierten fahrerlosen Transportfahrzeug gehört, veranlasst die Steuerung die Öffnung des Durchfahrtors nicht.

Es gibt mehrere Möglichkeiten festzustellen, ob sich ein fahrerloses Transportfahrzeug einem Sicherheitsbereich, an dessen Einfahrtsbereich der Sensor angebracht ist, nähert. Nach einer bevorzugten Ausführungsform der vorliegenden Erfindung kann vorgesehen sein, dass die Entfernung des fahrerlosen Transportfahrzeugs zum Einfahrtsbereich des Sicherheitsbereiches über eine Messung des Pulsabstands der vom fahrerlosen Transportfahrzeug ausgesendeten Abtast-Signalpulsen als Funktion der Zeit bestimmt wird. Auf diese Weise kann zeitaufgelöst festgestellt werden, ob sich ein Fahrzeug nähert oder vom Sicherheitsbereich entfernt. Ist das Fahrzeug autorisiert, kann auf diese Weise bereits vor Erreichen des Einfahrtsbereiches beispielsweise ein Tor geöffnet werden, sodass das fahrerlose Transportfahrzeug nicht einmal angehalten werden muss.

Auch kann nach einer bevorzugten Ausführungsform der vorliegenden Erfindung vorgesehen sein, dass aus der Höhe des Sensors über dem Boden und dem Abstrahlwinkel erfassten Abtast-Signals der Abstand des fahrerlosen Transportfahrzeugs zum Sicherheitsbereich bestimmt wird. Andersherum ist es so möglich, einen bestimmten Mindestabstand zum Einfahrtsbereich einzustellen, innerhalb dessen sich das fahrerlose Transportfahrzeug bewegen kann. Dieser Mindestabstand wird bei konstantem Abstrahlwinkel des Sicherheitsscanners dadurch eingestellt, dass der Sensor vom Boden aus gesehen in einer bestimmten Höhe fixiert wird. Je tiefer der Sensor fixiert ist, d. h. also je näher am Boden, desto größer ist der Mindestabstand, d. h. also der Abstand, innerhalb dessen das fahrerlose Transportfahrzeug vom Sensor überhaupt erfasst werden kann.

### Weg zur Ausführung der Erfindung

Die Erfindung wird nachfolgend anhand der Figuren 1 bis 5 näher erläutert.
Figur 1 zeigt eine Seitenansicht eines fahrerlosen Transportfahrzeugs auf einem Boden eines Infrastruktursystems.
Figur 2 zeigt eine Draufsicht auf das in Figur 1 gezeigte fahrerlose Transportfahrzeug.
Figur 3 zeigt eine weitere Seitenansicht des fahrerlosen Transportfahrzeugs im Bereich des Einfahrtsbereichs eines Infrastruktursystems.
Figur 4 zeigt eine Draufsicht auf die Situation von Figur 3.
Figur 5 zeigt noch eine weitere Seitenansicht im Bereich des Einfahrtsbereichs eines Infrastruktursystems.

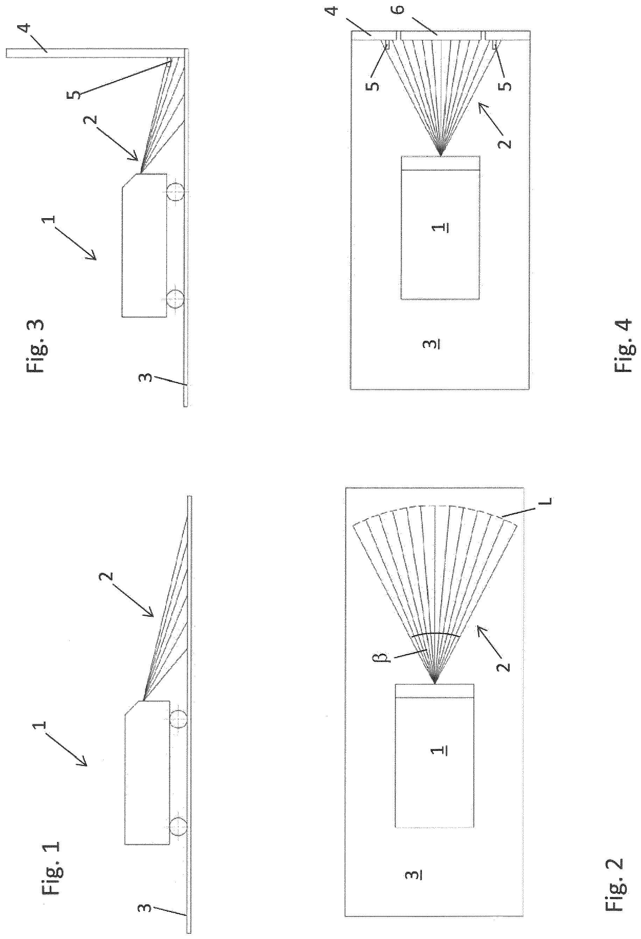

In Figur 1 ist ein schematisch dargestelltes FTF 1 zu sehen, welches sich auf einem Boden 3 selbsttätig bewegt. Das FTF 1 ist Teil eines fahrerlosen Transportsystems, welches wiede-rum Teil eines Infrastruktursystems ist und über eine geeignete Navigationsvorrichtung (nicht weiter dargestellt) verfügt. Zusätzlich verfügt das FTF 1 über einen Sicherheitsscanner, der ein Abtast-Signal 2 aussendet, und zwar in den Bereich vor dem FTF. In Figur 2 ist dargestellt, dass bevorzugt das Abtast-Signal 2, bei dem es sich um einen Laserstrahl aber auch jede andere Art von reflektierbarem Signal handeln kann, über den Sicherheitsscanner in einem Öffnungswinkel β in den Raum vor dem FTF 1 ausgestrahlt wird. Handelt es sich bei dem Abtast-Signal beispielsweise um einen Laserstrahl, so wird dieser periodisch hin und her bewegt, was durch die Linie L angedeutet ist. Auf diese Weise wird ein gewisser Winkel β im Raum mit dem Abtast-Signal 2 mit einer bestimmten Abtastfrequenz (dabei kann es sich z. B. um die Anzahl der Hin- und Her-Bewegungen des Abtast-Signals pro Zeiteinheit handeln) überfahren. Gegenstände, die innerhalb des so vom Abtast-Strahl gebildeten Kegel liegen, reflektieren das Abtast-Signal zum Sicherheitsscanner zurück, wo dann ein entsprechender Reflex detektiert und so festgestellt wird, dass sich ein Gegenstand im Fahrweg des FTS befindet.

Beim erfindungsgemäßen Infrastruktursystem wird das Abtast-Signal 2 nicht nur dazu verwendet, Hindernisse zu detektieren, sondern wird zudem genutzt, ein FTF 1 in oder an einem Sicherheitsbereich der Infrastruktur zu identifizieren.

Dazu weist der Sicherheitsbereich, wie in Figur 3 und 4 dargestellt, einen Sensor 5 oder eine Mehrzahl solcher Sensoren 5 auf. Diese Sensoren 5 sind darauf eingestellt, ein vom FTF abgestrahltes Abtast-Signal 2 zu detektieren. Die Sensoren 5 kommunizieren mit der Steuerung des Sicherheitsbereiches, sodass die Steuerung informiert wird, wenn sich ein FTF 1 dem Sicherheitsbereich nähert. Beispielhaft ist in den Figuren 3 und 4 der Einfahrtsbereich des Sicherheitsbereiches als Durchfahrtor 4 mit einer zu öffnenden Tür 6 dargestellt. Der Einfahrtsbereich muss aber keine Tür haben. Die Steuerung kann in dem Fall, in welchem ein FTF 1 sich nähert, prüfen, ob das FTF 1 berechtigt ist, in den Sicher-heitsbereich einzufahren. Wenn dies der Fall ist, kann die Tür 6 automatisch geöffnet werden.

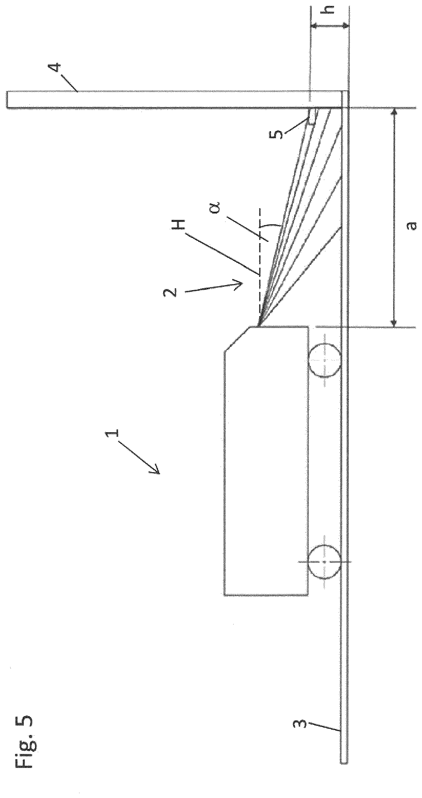

Wie in Figur 5 dargestellt, kann über die vertikale Höhe h des Sensors 5 ein Minimalabstand a definiert werden. Dieser Abstand a ergibt sich aus dem Abstrahlwinkel α zur Horizontalen H, mit welchem das Abtast-Signal, zum Beispiel Laserstrahlung, in Richtung des Bodens 3 abgestrahlt wird. Je höher der Sensor 5 folglich oberhalb des Bodens 3 montiert ist, desto kleiner wird der Minimalabstand a. Über die Höhe h lässt sich also einstellen, wieweit sich das FTF 1 dem Sicherheitsbereich (hier dargestellt durch das Bezugszeichen 4) nähern kann, ohne dass im Sicherheitsbereich ein bestimmtes Sicherheitsszenario ausgelöst werden muss.

## Patentansprüche

1. Verfahren zum Betreiben eines Infrastruktursystems, welches folgende Schritte umfasst:
Bereitstellen eines Infrastruktursystems, umfassend ein fahrerloses Transportsystem (FTS) mit wenigstens einem fahrerlosen Transportfahrzeug (1) sowie eine Steuerung, wobei das Infrastruktursystem weiter wenigstens einen Sicherheitsbereich mit einem für das fahrerlose Transportfahrzeug (1) durchfahrbaren Einfahrtsbereich (4, 6) umfasst, wobei das wenigstens eine fahrerlose Transportfahrzeug (1) einen ein Abtast-Signal mit einer bestimmten Abtastfrequenz aussendenden Sicherheitsscanner aufweist, der unabhängig von einem Navigationssystem zur Steuerung und Positionsbestimmung des fahrerlosen Transportfahrzeugs (1) im Fahrbereich des fahrerlosen Transportfahrzeugs (1) befindliche Gegenstände und Hindernisse erfasst, wobei im Einfahrtsbereich (4, 6) ein Sensor (5) angeordnet ist, der das von dem wenigstens einen fahrerlosen Transportfahrzeug (1) ausgesendete Abtast-Signal (2) erfassen kann, wobei die Steuerung im Ansprechen auf ein vorgegebenes, von dem Sensor (5) erfasstes Abtast-Signal das Vorhandensein und/ oder eine für das Befahren des Sicherheitsbereiches erforderliche Autorisierung des fahrerlosen Transportfahrzeugs (1) im Einfahrtsbereich (4, 6) feststellt,
Erfassen eines Abtast-Signals (2) des wenigstens einen fahrerlosen Transportfahrzeugs (1) mittels des Sensors (5), **dadurch gekennzeichnet,**
**dass** es folgende Schritte beinhaltet:
Prüfen, ob das erfasste Abtast-Signal (2) zu einem, insbesondere für die Durchfahrt durch ein Durchfahrtor (4, 6) berechtigten, fahrerlosen Transportfahrzeug (1) gehört oder nicht, wobei die Steuerung die Öffnung eines im Einfahrtsbereich zum Sicherheitsbereich befindlichen Durchfahrtors (6, 4) veranlasst, falls das erfasste Abtast-Signal (2) zu einem zur Durchfahrt autorisierten fahrerlosen Transportfahrzeug (1) gehört, oder
**dass** die Steuerung die Öffnung des Durchfahrtors (6, 4) nicht veranlasst, falls das erfasste Abtast-Signal (2) nicht zu einem autorisierten fahrerlosen Transportfahrzeug (1) gehört,
wobei die Prüfung, ob das erfasste Abtast-Signal (2) zu einem für die Durchfahrt durch das Durchfahrtor (4, 6) autorisierten fahrerlosen Transportfahrzeug (1) gehört oder nicht durchgeführt wird, indem geprüft wird, ob die Abtastfrequenz des Abtast-Signals (2) einem in der Steuerung des fahrerlosen Transportsystems (FTS) hinterlegten oder vorgegebenen Sollwert entspricht und/oder in einem vorgegebenen Sollwertintervall liegt.

2. Verfahren nach Anspruch 1,
**dadurch gekennzeichnet,**
**dass** das vom Sicherheitsscanner ausgesendete Abtast-Signal eine Laserstrahlung, ein Funksignal und/oder ein akustisches Signal umfasst.

3. Verfahren nach Anspruch 1 oder 2,
**dadurch gekennzeichnet,**
**dass** der Einfahrtsbereich ein vom fahrerlosen Transportfahrzeug durchfahrbares Durchfahrtor umfasst, welches eine Tür (6) aufweist, die durch die Steuerung im Ansprechen auf ein von der Steuerung als vorhanden und autorisiert festgestelltes vom fahrerlosen Transportfahrzeug abgestrahltes Signal geöffnet werden kann.

4. Verfahren nach Anspruch 1, 2 oder 3,
**dadurch gekennzeichnet,**
**dass** der Sicherheitsscanner des fahrerlosen Transportfahrzeugs (1) einen, zumindest in einer Ebene, drehbaren Scannerkopf aufweist.

5. Verfahren nach einem der vorigen Ansprüche,
**dadurch gekennzeichnet,**
**dass** es einen Maschinenarbeitsraum umfasst, welcher über den Einfahrtsbereich, insbesondere das Durchfahrtor (4, 6), zugänglich ist.

6. Verfahren nach einem der vorigen Ansprüche,
**dadurch gekennzeichnet,**
**dass** der Sicherheitsscanner des wenigstens einen fahrerlosen Transportfahrzeugs (1) Abtast-Signale mit einer vorgegebenen festen oder variierbaren Abtastfrequenz aussendet.

7. Verfahren nach einem der vorigen Ansprüche,
**dadurch gekennzeichnet,**
**dass** der Sicherheitsscanner des wenigstens einen fahrerlosen Transportfahrzeugs (1) Abtast-Signale in Pulsen versendet.

8. Verfahren nach einem der vorigen Ansprüche,
**dadurch gekennzeichnet,**
**dass** der Sensor (5) in einem ortsfesten Teil (4) des Einfahrtsbereiches angeordnet ist.

9. Verfahren nach einem der vorigen Ansprüche
**dadurch gekennzeichnet,**
**dass** vom Sicherheitsscanner versendete Abtast-Signale Abtast-Signalpulse beinhalten, und
**dass** die Entfernung des fahrerlosen Transportfahrzeugs (1) zum Einfahrtsbereich des Sicherheitsbereiches über eine Messung des Pulsabstands der vom fahrerlosen Transportfahrzeug (1) ausgesendeten Abtast-Signalpulsen als Funktion der Zeit bestimmt wird.

10. Verfahren nach einem der vorigen Ansprüche,
**dadurch gekennzeichnet,**
**dass** aus der Höhe (h) des Sensors (5) über dem Boden (3) und dem Abstrahlwinkel (α) des erfassten Abtast-Signals (2) der Abstand (a) des fahrerlosen Transportfahrzeugs (1) zum Sicherheitsbereich bestimmt wird.

11. Verfahren nach einem der vorigen Ansprüche,
**dadurch gekennzeichnet,**
**dass** das Abtast-Signal (2) Laserstrahlung ist.

## Claims

1. Method for operating an infrastructure system, which comprises the following steps:
installing an infrastructure system, comprising a driverless transport system (FTS) with at least one driverless transport vehicle (1), as well as a control system, wherein the infrastructure system comprises in addition at least one security region with an entry region (4, 6) through which the driverless transport vehicle (1) can pass, wherein the at least one driverless transport vehicle (1) has a security scanner which emits a scanning signal with a specific scanning frequency and which, independently of a navigation system for controlling and determining the position of the driverless transport vehicle (1), detects objects and obstructions situated in the travelling region of the driverless transport vehicle (1), wherein a sensor (5) is arranged in the entry region (4, 6) and can detect the scanning signal (2) which is emitted by the at least one driverless transport vehicle (1), wherein the control system in response to a predetermined scanning signal detected by the sensor (5) ascertains the presence and/or an authorisation, required for travelling through the security region, of the driverless transport vehicle (1) in the entry region (4, 6),
detecting a scanning signal (2) of the at least one driverless transport vehicle (1) by means of the sensor (5)
**characterised in that** it contains the following steps
checking whether the detected scanning signal (2) does or does not belong to a driverless transport vehicle (1), in particular one authorised or passing through a gateway (4, 6), wherein the control system causes the opening of a gateway (4, 6) situated in the entry region to the security region, if the detected scanning signal (2) belongs to a driverless transport vehicle (1) which is authorised to pass through, or wherein the control system does not cause the opening of the gateway (4, 6) if the detected scanning signal (2) does not belong to an authorised driverless transport vehicle (1), wherein the checking of whether the detected scanning signal (2) belongs or does not belong to a driverless transport vehicle (1) authorised to pass through the gateway (4, 6), is carried out by checking whether the scanning frequency of the scanning signal (2) corresponds to a predetermined target value or a target value filed in the control system of the driverless transport system (FTS), and/or lies in a predetermined target value interval.

2. Method according to claim 1 **characterised in that** the scanning signal emitted by the security scanner comprises a laser beam, a radio signal and/or an acoustic signal.

3. Method according to claim 1 or 2 **characterised in that** the entry region comprises a gateway through which the driverless transport vehicle can pass and which has a door (6) which can be opened by the control system in response to a signal emitted by the driverless transport vehicle and established by the control system as present and authorised.

4. Method according to claim 1, 2 or 3 **characterised in that** the security scanner of the driverless transport vehicle (1) has a scanner head which is able to rotate in at least one plane.

5. Method according to one of the preceding claims **characterised in that** it comprises a machine work area which is accessible via the entry region, in particular the gateway (4, 5).

6. Method according to one of the preceding claims **characterised in that** the security scanner of the at least one driverless transport vehicle (1) emits scanning signals with a predetermined fixed or variable scanning frequency.

7. Method according to one of the preceding claims **characterised in that** the security scanner of the at least one driverless transport vehicle (1) emits scanning signals in pulses.

8. Method according to one of the preceding claims **characterised in that** the sensor (5) is arranged in a locally fixed part (4) of the entry region.

9. Method according to one of the preceding claims **characterised in that** scanning signals emitted by the security scanner contain scanning signal pulses, and that the distance of the driverless transport vehicle (1) to the entry region of the security area is determined as a function of time via measuring the pulse distance of the scanning signal pulses emitted by the driverless transport vehicle (1).

10. Method according to one of the preceding claims, **characterised in that** the distance (a) of the driverless transport vehicle (1) to the security area is determined from the height (h) of the sensor (5) above the ground (3) and the beam angle (α) of the detected scanning signal (2).

11. Method according to one of the preceding claims **characterised in that** the scanning signal (2) is a laser beam.

## Revendications

1. Procédé de fonctionnement d'un système d'infrastructure comportant les étapes suivantes :
fourniture d'un système d'infrastructure comportant un système detransport sans conducteur (FTS) avec au moins un véhicule de transport sans conducteur (1) ainsi qu'un élément de commande, dans lequel le système d'infrastructure comporte en outreau moins une zone desécurité ayant une zone d'entrée (4, 6) que le véhicule de transport sans conducteur (1) peut parcourir, dans lequel l'au moins un véhiculede transport sans conducteur (1) comporte un scanner de sécuritéémettant un signal de balayage avec une certaine fréquence debalayage, qui, indépendamment d'un système de navigation pour commander le véhicule de transport sans conducteur (1) et en déterminer la position détecte des objets et des obstacles se trouvant dans la zone de circulation du véhicule de transport sans conducteur (1), dans lequel dans la zoned'entrée (4, 6) un capteur (5) est disposé, qui peut détecter le signal debalayage (2) émis par l'au moins un véhicule de transport sans conducteur (1), dans lequel l'élément de commande, en réponse à un signal de balayage prédéfini, détecté par le capteur (5), détermine dans la zone d'entrée (4, 6) la présence et/ou une autorisation du véhicule de transport sans conducteur (1) nécessaire pourcirculer dans la zone de sécurité,
détection d'un signal de balayage (2) de l'au moins un véhicule detransport sans conducteur (1)par l'intermédiaire du capteur (5),
caractérisé en cequ'elle comprend les étapes suivantes :
vérification, si le signal de balayage détecté (2) appartient ou n'appartient pas à unvéhicule de transport sans conducteur (1) autorisé surtoutpour le passage par une porte de passage (4, 6), dans lequel l'élémentde commande cause l'ouverture d'une porte de passage (4, 6) se trouvant dans la zone d'entrée à la zone de sécurité, si le signal de balayage détecté (2) appartient à un véhicule de transport sansconducteur (1) autorisé pour le passage, ou que l'élément de commande ne cause pas l'ouverture de la porte de passage (6, 4), si le signal de balayage détecté (2) n'appartient pas à un véhicule de transport sans conducteur autorisé (1),
dans lequel la vérification, si le signal de balayage détecté (2) appartient ou n'appartient pasà un véhicule de transport sans conducteur (1) autorisé pour le passage par une porte de passage (4, 6) est effectuée en vérifiant, si la fréquence de balayage du signal de balayage (2) correspond àune valeur de consigne stockée ou prédéfinie dans l'élément de commande et / ou se situe dans un intervalle de valeur de consigne prédéfinie.

2. Procédé selon la revendication 1,
**caractérisé en ce**
**que** le signal de balayage émis par le scanner de sécurité comporte un rayonnement laser, un signal radio et / ou un signal acoustique.

3. Procédé selon la revendication 1 ou 2,
**caractérisé en ce**
**que** la zone d'entrée comporte une porte de passage qui peut être parcourue par un véhicule de transport sans conducteur comportant une porte (6), qui peut être ouverte par l'élément de commande en réponse à un signal émis par le véhicule de transport sans conducteur et constaté par l'élément de commande comme étant présent et autorisé.

4. Procédé selon la revendication 1, 2 ou 3,
**caractérisé en ce**
**que** le scanner de sécurité du véhicule de transport sans conducteur (1) comporte une tête du scanner rotatif dans un moins un plan.

5. Procédé selon l'une quelconque des revendications précédentes,
**caractérisé en ce**
**qu'**il comporte un espace de travail des machines qui est accessible par la zone d'entrée, surtout la porte de passage (4, 6).

6. Procédé selon l'une quelconque des revendications précédentes,
**caractérisé en ce**
**que** le scanner de sécurité de l'au moins un véhicule de transport sans conducteur (1) émet des signaux de balayage avec une fréquence de balayage fixe ou variable prédéfinie.

7. Procédé selon l'une quelconque des revendications précédentes,
**caractérisé en ce**
**que** le scanner de sécurité de l'au moins un véhicule de transport sans conducteur (1) émet des signaux de balayage en impulsions.

8. Procédé selon l'une quelconque des revendications précédentes,
caractérisé en ce
le capteur (5) est agencé dans une partie fixe (4) de la zone d'entrée.

9. Procédé selon l'une quelconque des revendications précédentes,
**caractérisé en ce**
**que** des signaux de balayage émis par le scanner de sécurité comportent des impulsions des signaux de balayage et que la distance du véhicule de transport sans conducteur (1) à la zone d'entrée de la zone de sécurité est déterminée par une mesure de l'intervalle d'impulsions des impulsions des signaux de balayage émis par le véhicule de transport sans conducteur (1) en fonction du temps.

10. Procédé selon l'une quelconque des revendications précédentes,
**caractérisé en ce**
**que** la distance (a) du véhicule de transport sans conducteur (1) à la zone de sécurité est déterminée par la hauteur (h) du capteur (5) au-dessus du sol et l'angle de rayonnement (α) du signal de balayage détecté (2).

11. Procédé selon l'une quelconque des revendications précédentes,
**caractérisé en ce**
**que** le signal de balayage (2) est un rayonnement laser.
